# EUROPÄISCHE PATENTSCHRIFT

(11) **EP 2 455 685 B1**
(45) Veröffentlichungstag und Bekanntmachung des Hinweises auf die Patenterteilung: **04.01.2017**
(21) Anmeldenummer: 10014839.4
(22) Anmeldetag: 22.11.2010
(51) Int. Cl.: F24J 2/54, F24J 2/46, F24J 2/14

(54) **Elektrohydraulische Verstellvorrichtung eines Solartrogs**
Electro-hydraulic adjustment device of a solar trough
Dispositif de réglage hydroélectrique d'un bac solaire

(43) Veröffentlichungstag der Anmeldung: 23.05.2012
(73) Patentinhaber: HAWE Hydraulik SE, 81673 München (DE)
(72) Erfinder: Heusser, Martin, 81245 München (DE); Hundschell, Hilarius, 84424 Isen (DE)
(74) Vertreter: Grosse Schumacher Knauer von Hirschhausen

(56) Entgegenhaltungen:
- EP-A1- 1 985 867
- EP-A1- 2 226 592
- WO-A1-2009/087257
- DE-A1-102006 040 962
- DE-A1-102008 050 250
- US-A- 4 178 913

## Beschreibung

Die Erfindung betrifft eine elektrohydraulische Verstellvorrichtung der im Oberbegriff des Patentanspruchs 1 angegebenen Art.

Bei einer aus US 4 178 913 A bekannten elektrohydraulischen Verstellvorrichtung dieser Art wird für normale Nachführschritte Hydraulikenergie aus einem Druckspeicher verwendet. Eine Notfallverstellung bei einem Stromausfall, über einen Notfallschritt nach Osten, lässt sich ohne Notstromversorgung nicht ausführen, da die Magnetwegeventile in den verschiedenen Ausführungsformen bei einem Stromausfall in einer absperrenden Neutralstellung verbleiben und eine hydraulische Blockierung der Hydraulikzylinder vornehmen.

Bei einer gattungsgemäßen elektrohydraulischen Verstellvorrichtung eines Solartrogs gemäß WO 2009/087257 A1 werden Nachführschritte des Solartrogs mit der hydraulischen Energie aus einem Druckspeicher durchgeführt, der mittels einer Speicherladeschaltung aufgeladen wird. Bei einem Stromausfall wird der Solartrog über einen Notfallschritt nach Osten aus dem Druckspeicher verstellt, wobei ein zusätzlich vorgesehenes Ventil nur für den Notfallschritt vorgesehen ist. Das zusätzliche Ventil wird nur im Falle eines Stromausfalls aktiviert.

Weiterer Stand der Technik ist zu finden in DE 10 2008 050 250 A1 und DE 10 2006 040 962 A1.

Bei einer aus EP 2 226 592 A bekannten Verstellvorrichtung ist zumindest zum Ausführen eines Notfallschritts nach Osten durch Verdrehen des mehrere 100 Meter langen Solartrogs eine Notstromversorgung vorgesehen. Der Solartrog wird dann beispielsweise um c. a. 3° nach Osten, oder gleich in eine Verstauposition verstellt. Über die Notstromversorgung kann auch das Wärmeträgermedium in dem Absorberrohr des Solargenerators am Zirkulieren gehalten werden. In einer solchen Notsituation würde nämlich der noch auf die Sonne ausgerichtete, parabolische Solartrog das im Brennpunktbereich positionierte Absorberrohr beschädigen. Die Notstromversorgung ist aufwendig und teuer und muss permanent betriebsbereit gehalten werden. Bei in den USA geplanten 250 MW-Solarkraftwerken mit einer Vielzahl Solartrögen ist eine Notstromversorgung mit einer Leistung von etwa 3 MW notwendig.

Aus EP 1 985 867 A ist eine elektrohydraulische Verstellvorrichtung für ein Solarpaneel bekannt, das so angeordnet ist, dass es unter seinem Eigengewicht selbsttätig eine Schutzposition einnimmt, sobald in einer Notsituation die elektrohydraulische Verstellvorrichtung nicht mehr betätigbar ist. Um die Schutzposition zügig zu erreichen, wird ein Nachsaugweg für das Hydrauliköl geöffnet, wofür ein Überwachungsventil mit einem sehr schwachen Betätigungsmagneten vorgesehen ist, der im Normalbetrieb permanent bestromt wird und eine Sperrstellung einhält. Dieses Prinzip ist jedoch nicht für eine Verstellvorrichtung eines Solartrogs geeignet, der trotz seiner Größe und großen Masse um die Drehachse weitestgehend gewichtsausgeglichen und zudem durch extreme Windkräfte beaufschlagt sein kann.

Der Erfindung liegt die Aufgabe zugrunde, eine elektrohydraulische Verstellvorrichtung der eingangs genannten Art zu schaffen, die baulich einfach, mit günstiger Energiebilanz betriebssicher, und ohne Notstromversorgung betreibbar ist, um in einer Notsituation den Solartrog möglichst schnell aus der Sonne zu stellen.

Die gestellte Aufgabe wird mit den Merkmalen des Patentanspruchs 1 gelöst.

In Abkehr vom bekannten Prinzip, jegliche Verstellungen des Solartrogs direkt über die angetriebene Pumpe zu steuern, wird zunächst die Kapazität eines von der Pumpe aufgeladenen Druckspeichers zumindest für den Notfallschritt der Verstellung des Solartrogs nach Osten benutzt. Die primär zum Nachführen des Solartrogs eingestellte Verstellvorrichtung wird hierfür nach jedem Nachführschritt vorübergehend und vorsorglich zur Ausführung eines Notfallschritts umgestellt, und dann erst bei Initiieren des nächsten Nachführschritts wieder zurückgestellt. Somit wird der Notfallschritt in der Notsituation ohne Notstromversorgung ausgeführt, um Schaden vom Absorberrohr abzuwenden, und auf Beheben der Notsituation innerhalb der nächsten 24 Stunden zu zählen. Eine Verdrehung des Solartrogs um etwa 3° reicht aus, wofür die Hydrozylinder zum Beispiel einen Hub von kapp 30 mm auszuführen haben. Dafür wird nur eine moderate Druckspeicherkapazität benötigt, und wird mit günstiger Energiebilanz hohe Betriebssicherheit erzielt.

Bei einer zweckmäßigen Ausführungsform ist in der Druckleitung stromab des Druckspeichers ein aus einer Sperrstellung in Richtung zur Durchgangsstellung entweder in die Tankleitung oder in die dann druckarme Druckleitung druckvorgesteuertes 2/2-Wege-Schaltventil, vorzugsweise ein Sitzventil mit leckagefreier Absperrstellung, vorgesehen, und kombiniert mit einem zwischen der Druckvorsteuerung und der Tankleitung und/oder der Druckleitung stromab des 2/2-Wege-Schaltventils angeordneten Steueröl-2/2-Wege-Magnetsitzventil, das bestromt seine Sperrstellung einnimmt und das 2/2-Wege-Schaltventil in die Durchgangsstellung schaltet oder in dieser hält. Die Bestromung des Magneten des Magnetsitzventils wird von Steuervorrichtung vor jedem Nachführschritt abgeschaltet und nach jedem Nachführschritt wieder eingeschaltet. In der Notsituation entfällt die Bestromung ohne dies, so dass das Magnetsitzventil in die Durchgangsstellung geht und dafür sorgt, dass das 2/2-Wege-Schaltventil auf Durchgang schaltet, um den Notfallschritt aus dem Druckspeicher zu steuern. Da das Steueröl-2/2-Wege-Magnetsitzventil nur die geringe Steuerölmenge, gegebenenfalls bei gemindertem Steuerdruck, der Druckvorsteuerung des 2/2-Wege-Schaltventils zu verarbeiten hat, lässt sich ein kleinbauendes, leichtgängig schaltendes Magnetsitzventil mit einem nur außerordentlich schwachen Magneten verwenden, was die Energiebilanz weiter verbessert. Beispielsweise reicht eine Leistung von etwa 3 Watt für den Magneten des Magnetsitzventils aus.

Obwohl die Nachführschritte wie das Rückstellen des Solartrogs in die Morgenposition oder in wenigstens eine Verstauposition direkt aus der angetriebenen Pumpe steuerbar sind, ist bei einer zweckmäßigen Ausführungsform der Druckspeicher auch so verschaltet, dass er zumindest einen oder mehrere Nachführschritte zu steuern vermag, ohne die Pumpe einschalten zu müssen. Die Speicherladeschaltung sorgt dafür, dass der Druckspeicher stets genügend aufgeladen ist.

Bei einer zweckmäßigen Ausführungsform ist jedes Richtungsmagnetventil ein 2/4-Richtungsmagnetventil mit zwei gegensinnigen Magneten und einer Schaltstellungs-Selbsthalte-Memory-Verrastung, so dass die jeweils durch einen Magneten eingestellte Schaltstellung auch bei stromlosen Magneten zuverlässig gehalten wird und jeder Magnet nur für kurze Zeit, zum Beispiel 200 ms, bestromt zu werden braucht. Dies trägt zur günstigen Energiebilanz bei. Die Verrastung kann mechanischer oder elektromagnetischer Bauart sein, oder gegebenenfalls hydraulisch, beispielsweise aus dem Druckspeicher gespeist sein. Die Programmierung der Steuervorrichtung stellt die Richtungsmagnetventile nach jedem Nachführschritt zunächst vorübergehend und vorsorglich für einen Notfallschritt um, und stellt erst bei Initiieren des nächsten Nachführschritts über jeweils die anderen Magneten die Richtungsmagnetventile wieder für diesen Nachführschritt um. Sollte zwischen zwei Nachführschritten eine Notsituation auftreten, wird dann der Solartrog aus dem Druckspeicher über den Notfallschritt verstellt und aus der Sonne gedreht. Tritt keine Notsituation auf, wird der nächste Nachführschritt ordnungsgemäß ausgeführt, beispielsweise ebenfalls unter Nutzen des Druckspeichers.

Für den Fall, dass während der Ausführung eines Nachführschritts eine Notsituation auftritt, das heißt der Strom ausfällt oder abgeschaltet werden muss, ist bei einer zweckmäßigen Ausführungsform jedem, mehreren oder allen Magneten der Richtungsmagnetventile wenigstens ein Notsituations-Kondensator zugeordnet, dessen Kapazität ausreicht, trotz der aufgetretenen Notsituation die Magnete ordnungsgemäß zu betätigen. Der Notsituations-Kondensator stellt bei Auftreten der Notsituation automatisch die Verstellvorrichtung auf den Notfallschritt um, der dann aus dem Druckspeicher gesteuert wird. Der Notsituations-Kondensator ist beispielsweise an einer Platine der Steuervorrichtung installiert, und gegebenenfalls in Zuordnung zumindest einem Schaltrelais.

Eine zweckmäßige Ausführung, die ebenfalls ein 2/2-Wege-Magnetsitzventil nur für das Steueröl und deshalb mit sehr schwachem Magneten verwendet, weist zwischen dem an die Druckleitung stromab des 2/2-Wege-Schaltventils angeschlossenen Steueröl-2/2-Wege-Magnetsitzventil und der Tankleitung eine Nachsaugverbindung mit einem Rückschlagventil auf, das in Strömungsrichtung zur Tankleitung sperrt. Diese Nachsaugverbindung kann für bestimmte Betriebssituationen zweckmäßig sein. Das bei stromlosem Magneten des Magnetsitzventils von der Druckvorsteuerung des 2/2-Wege-Schaltventils abzulassende Steueröl wird in die dann ohnedies druckarme Druckleitung eingespeist. Dies bietet den Vorteil, kein Steueröl in die Tankleitung zu vergeuden, sondern stets im geschlossenen Kreislauf zu halten.

Bei einer Alternative mit weniger günstigerer Energiebilanz könnte die Kombination aus dem 2/2-Wege-Schaltventil mit Druckvorsteuerung und dem 2/2-Magnetsitzventil für das Steueröl durch ein direkt magnetbetätigtes, gegebenenfalls druckvorgesteuertes, 2/2-Wege-Schaltventil ersetzt sein.

Die Speicherladeschaltung ist so konzipiert, dass sie mittels zumindest eines Drucksensors ausgehend von einem sich bei Verbrauch einstellenden niedrigeren Speichernachladedruck einen höheren Speicherladedruck über die Pumpe erzeugt, der geringfügig unterhalb eines Systemgrenzdruckes liegt. Der Speichernachladedruck, bei welchem die Pumpe eingeschaltet wird, ist jedoch erheblich höher als ein zum Ausführen des Notfallschrittes, und gegebenenfalls auch zum Ausführen mehrerer Nachführschritte, erforderlicher Mindestdruck. Der Speichernachladedruck kann etwa 350 bar betragen, der Speicherladedruck kann etwa 400 bar betragen, der erforderliche Mindestdruck kann bei etwa 150 bar liegen, und der Systemgrenzdruck kann bei etwa 420 bar liegen. Daraus
resultiert zumindest für Nachführschritte, falls diese aus dem Druckspeicher gesteuert werden, ein breiter Druckbereich, und ist der Notfallschritt zuverlässig auch unter extremen Windkräften am Solartrog zuverlässig durchführbar.

Um auch unter Windkräften die jeweils eingestellte Drehposition des Solartrogs sicher zu halten, ist es zweckmäßig, wenn jeder Hydrozylinder in den Arbeitsleitungen mit zwei überkreuz aufsteuerbaren Lasthalteventilen abgesichert ist. Zusätzlich ist als weiterer Sicherheitsfaktor eine Verschaltung zweckmäßig, bei welcher die Arbeitsleitungen zwischen den Hydrozylindern und den Lasthalteventilen über Druckbegrenzungsventile an die Tankleitung angeschlossen sind. Diese Druckbegrenzungsventile können auf einen Ansprechdruck eingestellt sein, der unterhalb des Speichernachladedrucks liegt, und beispielsweise 340 bar beträgt, so dass von Seiten der Hydrozylinder erzeugte Druckstöße unter Umgehung der Lasthalteventile in die Tankleitung abgebaut werden.

Bei einer alternativen Ausführungsform ist zwischen einer Pumpen/Druckspeicher/Tank-Anordnung und den beiden Richtungsmagnetventilen ein 2/4-Wege-Umschaltventil entweder mit einer Druckvorsteuerung von der Pumpe und/oder mit einer Magnetbetätigung, jeweils in Richtung zu einer Einstellung der Verstellvorrichtung auf einen Nachführschritt vorgesehen. Ausschließlich bei Auftreten der Notsituation wird das 2/4-Wege-Umschaltventil durch Federkraft selbsttätig in eine Schaltstellung gebracht, die zum Ausführen des Notfallschrittes dient. Diese Schaltstellung stellt sich ein, wenn in der Notsituation der Pumpendruck abfällt bzw. die Magnetbetätigung stromlos wird. In der Druckleitung ist hierbei stromauf des 2/4-Wege-Umschaltventils und stromab des Druckspeichers ein Arbeitsöl-2/2-Magnetsitzventil vorgesehen, das unbestromt eine Durchgangsstellung einnimmt, vorzugsweise eine Druckvorsteuerung aufweist, die bei bestromtem Magneten die Sperrstellung einstellt. Dieses Arbeitsöl-2/2-Magnetsitzventil steuert primär die Nachführschritte, d.h. den zeitlichen Beginn und das Ende jedes Nachführschrittes, wobei im Normalbetrieb, d.h. bei ordnungsgemäß von der Pumpe aufgebautem Vorsteuerdruck oder bestromtem Magneten das 2/4-Wege-Umschaltventil beispielsweise die Druckleitung mit den einen Arbeitsleitungen und die anderen Arbeitsleitungen mit der Tankleitung verbindet. Tritt die Notsituation auf, entfällt die Druckvorsteuerung bzw. Magnetbetätigung des 2/4-Wege-Umschaltventils, das automatisch umschaltet und dann die Druckleitung mit den anderen Arbeitsleitungen und die Tankleitung mit den einen Arbeitsleitungen verbindet, so dass sich die Strömungsrichtungen an den beiden Richtungsmagnetventilen umkehren und automatisch, und ohne die Richtungsmagnetventile zu betätigen, der Notfallschritt aus dem Druckspeicher gesteuert wird. Auf diese Weise lässt sich die Taktzahl für die Magneten der Richtungsmagnetventile verringern, ohne die Betriebssicherheit zu gefährden.

Schließlich kann es zweckmäßig sein, die beiden Richtungsmagnetventile so zu verschalten, dass an das eine Richtungsmagnetventil die Arbeitsleitungen zu beiden Hydrozylindern angeschlossen sind, hingegen das andere Richtungsmagnetventil zwischen den Arbeitsleitungen zu einem Hydrozylinder und dem anderen Hydrozylinder angeordnet ist. Zum Einziehen oder Ausschieben der Hydrozylinder für Nachführschritte braucht dann nur das eine Richtungsmagnetventil umgestellt zu werden, solange beide Hydrozylinder gleich laufen (Einfahren oder Ausfahren). Das andere Richtungsmagnetventil braucht hingegen nur dann betätigt zu werden, wenn der eine oder andere Hydrozylinder über seinen Totpunkt oder Umkehrpunkt hinweggeht (ein Hydrozylinder zieht, während der andere Hydrozylinder schiebt). Dies verbessert die Energiebilanz, da weniger Magnetschalttakte bei den häufig auszuführenden Nachführschritten erforderlich sind.

Anhand der Zeichnungen werden Ausführungsformen des Erfindungsgegenstandes erläutert. Es zeigen:
- Fig. 1: schematisch einen Antriebspylonen mit elektrohydraulischer Verstellvorrichtung eines Solartroges, in einer Abendstellung, orientiert nach Westen,
- Fig. 2: ein Blockschaltbild einer Steuervorrichtung der Verstellvorrichtung, in drucklosem Zustand,
- Fig. 3: ein Blockschaltbild einer weiteren Ausführungsform der Steuervorrichtung,
- Fig. 4: ein Detail aus den Fig. 2 und 3,
- Fig. 5: ein Blockschaltbild eines Teils einer weiteren Ausführungsform der Steuervorrichtung, und
- Fig. 6: ein Blockschaltbild eines Teils einer weiteren Ausführungsform der Steuervorrichtung.

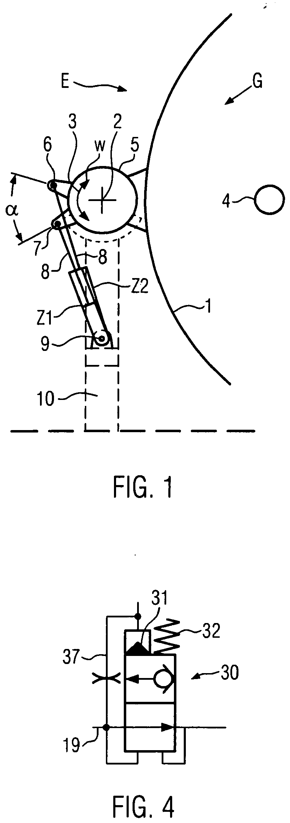

Ein Solargenerator G in Fig. 1 weist einen Solartrog E mit einem Parabol-Reflektor 1 auf, in dessen Brennpunktbereich wenigstens ein Absorberrohr 4 positioniert ist, das ein nicht gezeigtes Wärmeträgermedium enthält. In einem Solarkraftwerk ist eine Vielzahl solcher Solartröge E auf dem Boden aufgestellt. Der Parabol-Reflektor 1 ist mit einer elektrohydraulischen Verstellvorrichtung um eine Drehachse 2 schwenkbar, die beispielsweise eine Nord/Süd-Ausrichtung hat, um dem Stand der Sonne bei deren Bewegung von Osten nach Westen nachgeführt zu werden (in Fig. 1 im Uhrzeigersinn). Fig. 1 zeigt z.B. die Abendposition des Parabol-Reflektors 1 mit Orientierung nach Westen. Um den Parabol-Reflektor 1 während der Nacht in eine Morgenposition mit Orientierung nach Osten oder in wenigstens eine nicht gezeigte Verstauposition (z.B. schräg nach unten), oder über einen Notfallschritt nach Osten zu drehen, sind zwei doppelt wirkende Hydrozylinder Z1, Z2 (z.B. Differentialzylinder) an einem die Drehachse 2 enthaltenden Teil 5 mit einer gegenseitigen Versetzung a (z.B. 30°) in Anlenkpunkten 6, 7 mit Kolbenstangen 8 angelenkt. Die Hydrozylinder Z1, Z2 stützen sich in einem Widerlager 9 eines Antriebspylons 10 des Solartrogs E ab und dienen auch zur Nachführung und zum Ausführen jeweils eines Notfallschrittes, um den Parabel-Reflektor 1 aus der Sonne zu stellen.

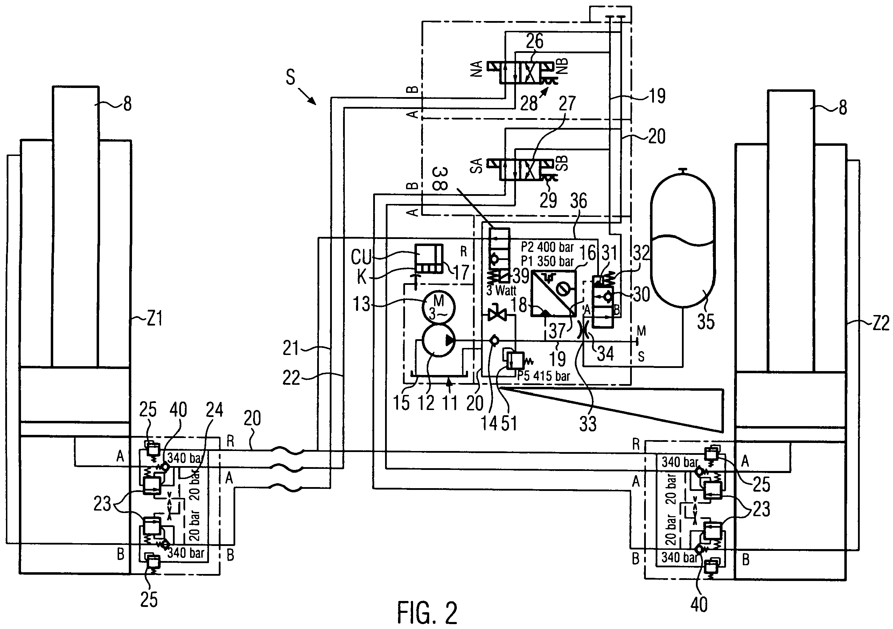

Die elektrohydraulische Verstellvorrichtung enthält eine Steuervorrichtung S, beispielsweise entsprechend den Fig. 2 bis 6. Die Hydrozylinder Z1, Z2 werden zum Ausführen von Nachführschritten nach Westen beispielsweise jeweils nach 15 bis 20 Sekunden kurzfristig beaufschlagt, um jeweils einen Hub von einigen Millimetern auszuführen. Ferner werden die Hydrozylinder Z1, Z2 in einer durch einen Stromausfall oder eine gewollte Stromabschaltung bedingten Notsituation gesteuert, um den auf die Sonne ausgerichteten Solartrog E umgehend über einen Notfallschritt von beispielsweise etwa 3° nach Osten aus der Sonne zu drehen. Schließlich wird, wie erwähnt, der Solartrog E, z.B. bei schlechtem Wetter (Sturm oder dgl.), in wenigstens eine nach unten orientierte Verstauposition verdreht, und am Abend oder während der Nacht aus der Abendposition zurück in die Morgenposition, wobei jeweils die Hydrozylinder Z1, Z2 entsprechend beaufschlagt werden. Diese von den Hydrozylindern Z1, Z2 vorgenommenen Verstellungen sind in Fig. 1 durch einen Doppelpfeil 3 angedeutet.

Insgesamt lässt sich der Solartrog E über beispielsweise annähernd 210° verstellen. Aufgrund der Versetzung von etwa 30° zwischen den Anlenkpunkten 6, 7 der Kolbenstangen 8 der Hydrozylinder Z1, Z2 werden abhängig vom Stand der Sonne beide Hydrozylinder Z1, Z2 gleichläufig ausgefahren oder eingefahren oder werden die Hydrozylinder gegenläufig betätigt, d.h. wird der eine Hydrozylinder ausgefahren und gleichzeitig der andere Hydrozylinder eingefahren, und umgekehrt, wobei jeder Hydrozylinder Z1, Z2 dazwischen einen Totpunkt oder Umkehrpunkt überfährt. Die Richtungssteuerung der Hydrozylinder Z1, Z2, entweder gleichläufig oder gegenläufig, erfolgt über Richtungsmagnetventile 26, 27 in der Steuervorrichtung.

Die elektrohydraulische Steuervorrichtung S in Fig. 2 weist eine Pumpe/Tank/Druckspeicher-Anordnung 11 mit einer von einem Elektromotor 13 angetriebenen Pumpe 12 und einem Druckspeicher 35 auf. In einer von der aus einem Tank 15 (R) ansaugenden Pumpe 12 gespeisten Druckleitung 19 ist ein Rückschlagventil 14 angeordnet, stromab dessen an einem Knoten 33 der Druckspeicher 35 angeschlossen ist. Der Tank 15 ist mit einer Tankleitung 20 verbunden. Ferner ist eine Speicherladeschaltung 16 vorgesehen, die mit einem Drucksensor 18 zwischen dem Rückschlagventil 14 und dem Knoten 33 den Druck in der Druckleitung 19 abgreift und einen Speicherladebetrieb steuert, bei welchem die Pumpe 12 den Druckspeicher 35 zunächst erstmalig lädt bzw. jeweils nachlädt, wenn bestimmte Druckverhältnisse in der Druckleitung 19 entstanden sind. Die Hydrozylinder Z1, Z2 werden zumindest für den jeweiligen Notfallschritt aus dem Druckspeicher 35 gesteuert, der entsprechend ausgelegt ist, und ein unter Druck stehendes Gas, z.B. Stickstoff, enthält, das über eine Membrane oder einen Kolben von einer Hydrauliköl enthaltenden Kammer separiert ist. Optional können die Nachführschritte unter Einschalten der Pumpe gesteuert werden, oder nur aus dem Druckspeicher 35, der gegebenenfalls mehrere Nachführschritte steuern kann, ohne die Pumpe 12 einschalten zu müssen.

Ein zwischen der Druckleitung 19 und der Tankleitung 20 angeordnetes Druckbegrenzungsventil 51 ist beispielsweise auf einen Systemgrenzdruck P5 von etwa 415 bar eingestellt. Die Speicherladeschaltung 16 arbeitet so, dass die Pumpe 12, die beispielsweise nur eine geringe Förderleistung von etwa 2 Liter/Minute hat, den Druckspeicher 35 erstmals bis auf einen Speicherladedruck P2 von etwa 400 bar auflädt, und danach der Elektromotor 13 abgeschaltet wird, bis verbrauchsbedingt der Druck in der Druckleitung 19 auf einen Speichernachladedruck P1 von etwa 350 bar abfällt, und der Elektromotor 13 wieder eingeschaltet wird. Selbst in einer Notsituation, in der aufgrund Stromausfall oder Stromabschaltung die Pumpe 12 nicht mehr antreibbar ist, reicht der Druckbereich zwischen dem Speichernachladedruck P1 von etwa 350 bar bis zu einem Mindestdruck P3 von beispielsweise mindestens 150 bar oder weniger aus, ohne Hilfe der Pumpe 12 aus dem Druckspeicher 35 zumindest einen Notfallschritt zu steuern, selbst bei starkem Wind und somit hohen Reaktionskräften des Solartrogs E um die Drehachse 2.

Jeder Hydrozylinder Z1, Z2 (doppelt wirkend) ist an zwei Arbeitsleitungen 21, 22 (A, B) angeschlossen, die von über Steuerleitungen 24 überkreuz, z.B. bereits mit 20 bar, aufsteuerbaren Lasthalteventilen 23 abgesichert sind. Jedes Lasthalteventil 23 wird durch ein Rückschlagventil 40 umgangen, das in Abströmrichtung aus dem Hydrozylinder Z1, Z2 sperrt. Optional können ferner Druckbegrenzungsventile 25 vorgesehen sein, die auf einen Ansprechdruck P4 von etwa 340 bar eingestellt sind, um extreme Druckspitzen zur Tankleitung 20 abzubauen.

Die Arbeitsleitungen 21, 22 jedes Hydrozylinders Z1, Z2 sind über je ein Richtungsmagnetventil 26, 27 wahlweise mit der Druckleitung 19 und der Tankleitung 20 verbindbar. Jedes Richtungsmagnetventil 26, 27 ist in der gezeigten Ausführungsform ein 2/4-Richtungs-Magnetventil mit zwei gegensinnigen Magneten NA, NB; SA, SB für jeweils eine Schaltrichtung, wobei an jedem Richtungsmagnetventil 26, 27 zumindest eine Schaltstellungs-Selbsthalte-Memory-Verrastung 28, 29 vorgesehen ist, die dafür sorgt, dass bei Stromausfall oder Stromabschaltung und allgemein die durch nur eine kurzzeitige Magnetbetätigung (z.B. jeweils über 200 Millisekunden) eingestellte Schaltstellung gehalten bleibt (z.B. bis der jeweils andere Magnet bestromt wird und in die andere Schaltstellung umschaltet). Die Verrastungen 28, 29 können mechanisch, magnetisch oder gegebenenfalls auch hydraulisch wirken.

In der Druckleitung 19 ist in Fig. 2 stromab des Knotens 33, und einer gegebenenfalls vorgesehenen Blende 34 ein 2/2-Wege-Schaltventil 30 mit einer aus einem allgemein mit 37 angedeuteten Vorsteuerkreis gespeisten Druckvorsteuerung 31 und einer Rücksteilfeder 32 vorgesehen. Von der Druckvorsteuerung 31 führt eine Steuerleitung 36 für Steueröl zur Tankleitung 20. In der Steuerleitung 36 ist ein Steueröl-2/2-Magnetsitzventil 38 mit einem Schwarz/Weiß-Magneten 39 angeordnet, der bestromt gegen eine Rückstellfeder arbeitet und eine Absperrstellung einstellt. Bei stromlosem Magneten 39 wird von der Rückstellfeder die gezeigte Durchgangsstellung eingestellt, in der die Druckvorsteuerung 31 zur Tankleitung 20 entlastet ist. Ist der Magnet 39 bestromt, dann nimmt das 2/2-Wege-Schaltventil 30 seine Absperrstellung ein, in der die Druckleitung 19 zu den Richtungsmagnetventilen 26, 27 unterbrochen ist. Ist der Magnet 39 stromlos, ist die Druckleitung 19 offen.

Die Steuervorrichtung S weist ferner eine elektronische Steuervorrichtung CU mit einer Programmsektion oder Programmierung 17 auf. Die Steuervorrichtung CU ist zumindest mit den diversen Magneten, gegebenenfalls der Speicherladeschaltung 16, und dem Elektromotor 13 verbunden.

Optional können ferner zumindest den Magneten NA, NB, SA, SB Notsituations-Kondensatoren K zugeordnet sein, die beispielsweise auf einer Platine der Steuervorrichtung installiert, und mit ausreichender Kapazität ausgebildet sind, um den jeweiligen Magneten im Falle eines Stromausfalls oder einer Stromabschaltung ausreichend zu bestromen, beispielsweise um den Notfallschritt aus dem Druckspeicher 35 zu steuern. Gegebenenfalls ist allen Magneten ein gemeinsamer Notsituations-Kondensator K zugeordnet.

Zumindest bei der Ausführung eines Notfallschrittes nach Osten wird die Kapazität des Druckspeichers 35 genutzt. Der Druckspeicher 35 kann, optional, auch, entweder ständig oder fallweise, für die Nachführschritte benutzt werden. Bei der Rückführung des Solartrogs E in die Morgenposition kann der Elektromotor 13 permanent und/oder intermittierend angetrieben sein, und auch bei der Überführung des Solartrogs E in wenigstens eine Verstauposition, beispielsweise im Falle einer witterungsbedingt erforderlichen Außerbetriebnahme des Solargenerators G.

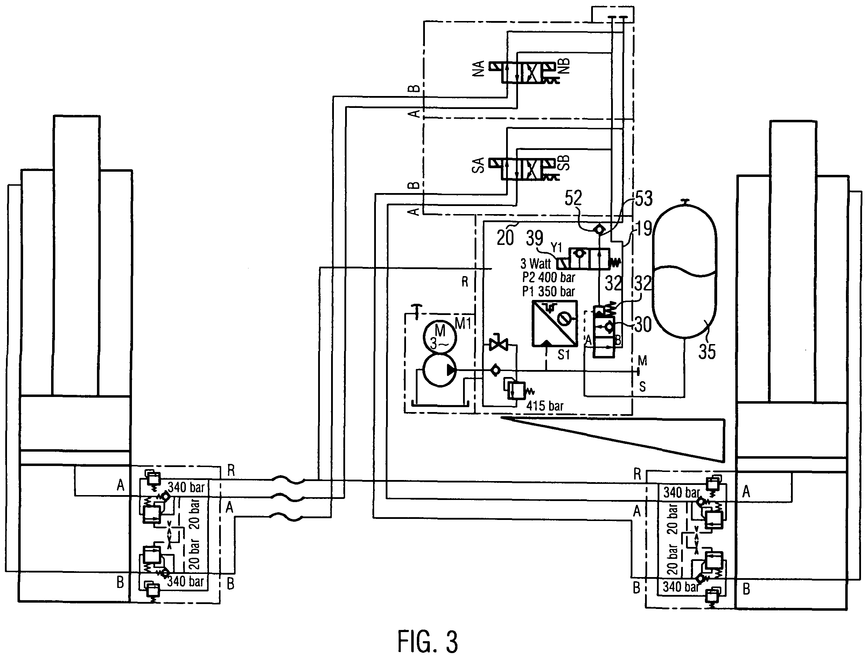

Die Ausführungsform der Steuervorrichtung S in Fig. 3 unterscheidet sich von der der Fig. 2 dadurch, dass das Steueröl-2/2-Wege-Magnetsitzventil 38 in der hier zur Druckleitung 19 stromab des 2/2-Wege-Umschaltventils 30 führenden Steuerleitung 36' angeordnet ist. Das Steueröl aus der Druckvorsteuerung 1 wird bei stromlosem Magneten 39 in die dann relativ druckarme Druckleitung 19 gebracht, um einen Steuerölverlust in die Tankleitung 20, wie in Fig. 2, zu vermeiden. Ferner kann (Option) eine Nachsaugverbindung 53 mit einem zur Tankleitung 20 sperrenden Rückschlagventil 52 zwischen der Tankleitung 20 und der Druckleitung 19 stromab des 2/2-Wege-Umschaltventils 30 vorgesehen sein.

Nachfolgend werden unter Bezug auf die Fig. 1, 2 und 3 Betriebsabläufe für Nachführschritte des Solartrogs, und auch für einen Notfallschritt erläutert.

Zum erstmaligen Laden des Druckspeichers 35 wird der Elektromotor 13 eingeschaltet. Gleichzeitig ist der Magnet 39 bestromt. Das 2/2-Wege-Umschaltventil 30 nimmt die Sperrstellung ein. Der Druckspeicher 35 wird geladen, bis der Drucksensor 18 das Erreichen des Speicherladedrucks P2 meldet. Der Elektromotor 13 wird ausgeschaltet. Der Magnet 39 bleibt bestromt. Es wird kein Hydrozylinder Z1, Z2 betätigt.

Zum Nachladen des Druckspeichers 35 spricht bei bestromtem Magneten 39 der Drucksensor 18 auf das Erreichen des Nachladedrucks P1 an. Der Elektromotor 13 wird eingeschaltet, bis der Drucksensor 18 den Speicherladedruck P2 meldet. Der Elektromotor 13 wird ausgeschaltet. Der Magnet 39 bleibt bestromt. Die Druckleitung 19 ist von den Arbeitsleitungen 21, 22 getrennt. Es wird kein Hydrozylinder Z1, Z2 betätigt.

Für einen Nachführschritt Richtung Westen (vor dem Zenit) werden Magneten SB und NB beispielsweise über 200 Millisekunden bestromt. Der Magnet 39 wird stromlos geschaltet. Die Druckvorsteuerung 31 wird in Fig. 2 zur Tankleitung 20 entlastet (in Fig. 3 in die zur dieser Zeit druckarme Druckleitung 19), so dass das 2/2-Wege-Umschaltventil 30 die Durchgangsstellung einnimmt. Beide Hydrozylinder Z1, Z2 werden in der gezeigten Stellung der Richtungsmagnetventile 26, 27 z.B. so betätigt, dass die Kolbenstangen 8 gleichläufig einfahren. Zum Beenden des Nachführschrittes wird der Magnet 39 bestromt. Vorsorglich werden auch die Magneten SA und NA über beispielsweise 200 Millisekunden bestromt, so dass die Richtungsmagnetventile 26, 27 umschalten und durch die Schaltstellungs-Selbsthalte-Memory-Verrastungen 28, 29 in den neuen Schaltstellungen gehalten werden, die zum Durchführen eines Notfallschrittes nach Osten (im Falle des Auftretens der Notsituation) dienen könnten. Tritt keine Notsituation ein, wird dieser Ablauf für einen Nachführschritt in programmierten Abständen und/oder unter Abtastung der Änderung des Sonnenstandes wiederholt, bis ein Hydrozylinder Z1 oder Z2 sich seinem Totpunkt oder Umkehrpunkt nähert, ab dem er für weitere Nachführschritte seine Kolbenstange 8 auszufahren hat.

Nachdem der eine Hydrozylinder Z1 nun bei dem Nachführschritt seinen Totpunkt oder Umkehrpunkt erreicht hat, wird über die Steuervorrichtung CU der Magnet NA bestromt, z.B. über 200 Millisekunden, so dass das Richtungsmagnetventil 26 umschaltet, und der Hydrozylinder Z1 bei weiteren Nachführschritten seine Kolbenstange 8 ausfährt, während die Kolbenstange 8 des Hydrozylinders Z2 weiterhin einfährt, z.B. bis der gerade ausgeführte Nachführschritt beendet ist. Solange war der Magnet 39 stromlos, der zum Beenden des Nachführschrittes wieder bestromt wird. Danach oder dabei werden erneut die Magneten SA und NB über 200 Millisekunden bestromt, um wieder vorsorglich für einen Notfallschritt die 2/4-Richtungsmagnetventile 26, 27 entsprechend umzustellen.

Bei einem von weiteren Nachführschritten erreicht auch der Hydrozylinder Z2 seinen Totpunkt oder Umkehrpunkt, an welchem der Magnet SA über 200 Millisekunden bestromt wird, wonach beide Hydrozylinder Z1, Z2 bei stromlosem Magneten 39 den Nachführschritt durch gleichläufiges Ausfahren der Kolbenstangen 8 beenden, was durch Bestromen des Magneten 39 veranlasst wird. Gleichzeitig oder nachfolgend werden vorsorglich für einen Notfallschritt erneut die Magneten SB und NB über 200 Millisekunden bestromt.

Bei jedem weiteren Nachführschritt bis in die in Fig. 1 gezeigte Abendposition werden jeweils die Magneten SA und NA über 200 Millisekunden bestromt, um zunächst die vorsorglich eingestellte Schaltstellung für den Notfallschritt zu beseitigen, wobei der Magnet 39 stromlos geschaltet ist, damit der Nachführschritt bis zu einem Ende durchgeführt wird, wobei beide Hydrozylinder Z1, Z2 ihre Kolbenstangen gleichläufig ausfahren. Der jeweilige Nachführschritt wird durch Bestromen des Magneten 39 beendet. Mit dem Ende eines Nachführschrittes werden gleichzeitig oder nachfolgend die Magneten SB und NB über 200 Millisekunden bestromt, um vorsorglich wieder die Schaltstellungen für einen Notfallschritt einzustellen.

Sollte zwischen den oben erläuterten Nachführschritten des Solartrogs E eine durch einen Stromausfall oder eine gewollte Stromabschaltung bedingte Notsituation eintreten, wird der Magnet 39 stromlos, so dass unter Nutzen der vorsorglichen Notfallschaltstellungen aus dem Druckspeicher 35 über das in die Durchgangsstellung geschaltete 2/2-Wege-Umschaltventil 30 der Notfallschritt nach Osten über beispielsweise 3° ausgeführt wird.

Um sicherzustellen, dass bei Auftreten einer Notsituation während eines Nachführschrittes ebenfalls der Notfallschritt ordnungsgemäß gesteuert werden kann, sind zweckmäßig den Magneten NA, NB; SA, SB Notsituations-Kondensatoren K mit einer Kapazität zugeordnet, die ausreicht, bei Stromausfall die Magnetbestromung über 200 Millisekunden durchzuführen, die die Richtungsmagnetventile 26, 27 in die Stellungen für den Notfallschritt umstellt, der dann aus dem Druckspeicher 35 gesteuert wird, ohne die Pumpe 12 einschalten zu müssen oder zu können.

Diese durch wenigstens einen Notsituations-Kondensator K für jeden oder für einige oder alle der Magneten SA, SB; NA, NB gewährleistete Art einer Ausfallsicherheit kann bei einer alternativen Ausführungsform der Steuervorrichtung S (nicht gezeigt) sogar eingesetzt werden, um das jeweilige vorsorgliche Umschalten der Richtungsmagnetventile 26, 27 auf den Notfallschritt nach jedem Nachführschritt und das Wiederumschalten vor Ausführen des Nachführschrittes einzusparen.

Fig. 4 verdeutlicht eine mögliche Ausführungsform des 2/2-Wege-Umschaltventils 30, das in den Fig. 2 und 3 schematisch gezeigt ist.

Das 2/2-Wege-Umschaltventil 30 ist aus der Druckleitung 19 druckvorgesteuert, und zwar z.B. über die Vorsteuerleitung 37 zu einer Aufsteuerseite und zu einer Schließsteuerseite eines nicht gezeigten Ventilschließgliedes. In der Vorsteuerleitung 37 ist zwischen der Druckleitung 19 und der Druckvorsteuerung 31 eine Drossel enthalten. Das Schließglied wird auch durch die Rückstellfeder 32 in Schließrichtung zur Sperrstellung beaufschlagt, in der die Druckleitung 19 unterbrochen ist. Die an der Aufsteuerseite und der Schließsteuerseite vom jeweiligen Vorsteuerdruck beaufschlagbaren Druckflächen zum Verstellen des Ventilschließgliedes können verschieden groß sein. Ferner ist die Drossel in der Vorsteuerleitung 37 kleiner als die Durchgangsgröße bei in der Durchgangsstellung befindlichem 2/2-Steueröl-Magnetsitzventil 38. Die Drossel kann beispielsweise einer 0,4 mm Bohrung entsprechen, während die Durchgangsgröße des Magnetsitzventils 38 (Fig. 2 und 3) beispielsweise einer Bohrung einer Größe von etwa 0,7 bis 0,8 mm entspricht. Daraus resultiert das benötigte Schaltverhalten des 2/2-Wege-Umschaltventils 30.

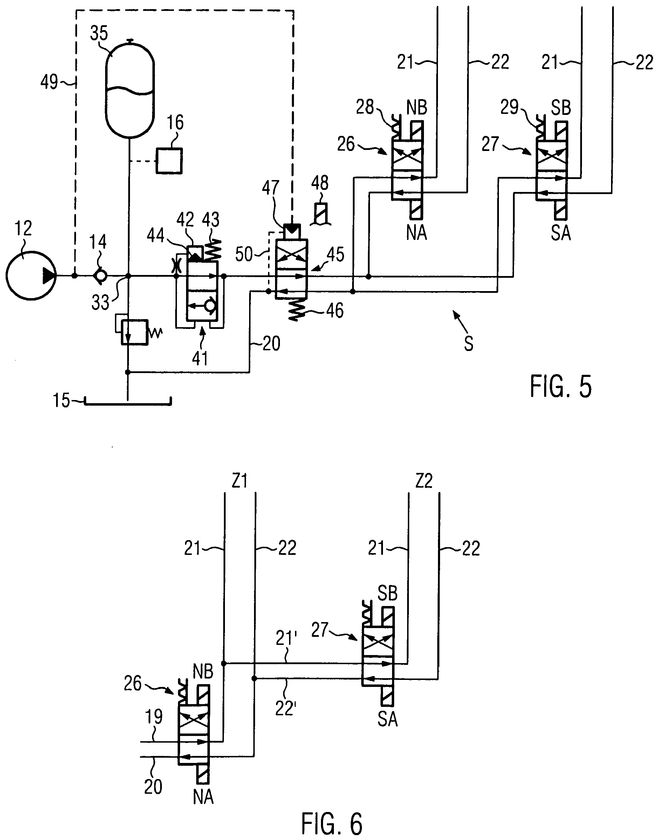

Die Ausführungsform der Steuervorrichtung S in Fig. 5 unterscheidet sich von denen der Fig. 2 und 3 dadurch, dass zwischen dem Knoten 33 und den beiden Richtungsmagnetventilen 26, 27 (die parallel geschaltet sind) ein 2/2-Wege-Umschaltventil 41 mit einem Betätigungsmagneten 42, einer Rückstellfeder 43 und einer Druckvorsteuerung 44, sowie stromab desselben ein 2/4-Wege-Umschaltventil 45 für Arbeitsöl vorgesehen sind, das eine Rückstellfeder 46 und entweder eine Druckvorsteuerung 47 oder einen Magneten 48 oder einen Magneten 48 und eine Druckvorsteuerung 47 aufweist, die mit einer Steuerleitung 49 von der Druckleitung 19 stromauf des Rückschlagventils 14 gespeist wird. Die Druckvorsteuerung 47 wird über eine Steuerleitung 50 zur Tankleitung 20 entlastet.

Das 2/2-Wege-Magnetsitzventil 41 dient zum Initiieren und Beenden jedes Nachführschrittes und nimmt bei stromlos geschaltetem Magneten 42 die gezeigte Durchgangsstellung ein. Das 2/4-Wege-Umschaltventil 45 stellt bei ordnungemäßem Druck in der Steuerleitung 49 und/oder bestromtem Magneten 48 eine (nicht gezeigte) Verbindung zwischen der Druckleitung 19 der Tankleitung 20 und den Arbeitsleitungen 21, 22 her, die die Richtung zum Ausführen eines Nachführschrittes festlegt, den die entsprechend eingestellten Richtungsmagnetventile 27, 26 steuern. Entfällt hingegen bei Auftreten einer Notsituation die Bestromung des Magneten 48 und/oder der Druck in der Steuerleitung 49, dann nimmt das 2/4-Wege-Umschaltventil 45 die gezeigte Schaltstellung ein, in der die Richtung umgekehrt wird, so dass die durch die Schaltstellungs-Selbsthalte-Memory-Verrastungen 28, 29 vom vorhergehenden Nachführschritt festgehaltenen Richtungsmagnetventile 26, 27 selbsttätig einen Notfallschritt aus dem Druckspeicher 35 steuern. Die Magneten NA, NB; SA, SB brauchen in dieser Ausführungsform nicht nach jedem Nachführschritt vorsorglich umgestellt zu werden, da das 2/4-Wege-Umschaltventil 45 selbsttätig für den Notfallschritt sorgt, sobald die Notsituation auftritt und entweder die Steuerleitung 49 drucklos und/oder der Magnet 48 stromlos wird.

In der Ausführungsform in Fig. 6 sind die Richtungsmagnetventile 26, 27 so verschaltet, dass das Richtungsmagnetventil 26 an die Druckleitung 19 und die Tankleitung 20 angeschlossen ist, während das Richtungsmagnetventil 27 an die Arbeitsleitungen 21, 22 zum Hydrozylinder Z1 über Überleitungen 21', 22' angeschlossen ist. Dies bedeutet weniger Schalttakte zumindest für das Richtungsmagnetventil 27, das nur umgeschaltet zu werden braucht, wenn der Hydrozylinder Z2 seinen Totpunkt oder Umkehrpunkt erreicht oder durchfahren muss.

## Patentansprüche

1. Elektrohydraulische Verstellvorrichtung eines um eine Achse (2) drehbaren Solartrogs (E) eines Solargenerators (G), mit zwei mit der Achse (2) gekoppelten, doppelt wirkenden Hydrozylinder (Z1, Z2) zumindest zum schrittweisen Nachführen des Solartrogs (E) nach dem Stand der von Osten nach Westen wandernden Sonne und zum Ausführen eines Notfallschritts nach Osten in einer durch Stromausfall oder Stromabschaltung bedingten Notsituation, wobei Arbeitsleitungen (21, 22) der Hydrozylinder (Z1, Z2) jeweils über ein Richtungsmagnetventil (26, 27) wahlweise mit einer an eine elektromotorisch antreibbare Pumpe (12) angeschlossenen Druckleitung (19) und einer Tankleitung (20) verbindbar sind, und mit einer mit den zumindest mit den Richtungsmagnetventilen (26, 27) und der Pumpe (12) verbundenen, elektronischen und programmierbaren Steuervorrichtung (CU), wobei ein an die Druckleitung (19) angeschlossener Druckspeicher (35) und eine Speicherladeschaltung (16) für die Pumpe (12) vorgesehen sind, und der auf die Sonne ausgerichtete Solartrog (E) selbsttätig über zumindest einen Notfallschritt aus dem Druckspeicher (35) verstellbar ist, **dadurch gekennzeichnet, dass** die Verstellvorrichtung mit der Steuervorrichtung (CU) nach jedem ausgeführten Nachführschritt nach Westen vorübergehend und vorsorglich zur Ausführung eines Notfallschritts nach Osten umstellbar und erst vor dem jeweils nächsten Nachführschritt zur Ausführung dieses nächsten Nachführschritts wieder rückstellbar ist.

2. Elektrohydraulische Verstellvorrichtung nach Anspruch 1, **dadurch gekennzeichnet, dass** in der Druckleitung (19) stromab des Druckspeichers (35) ein druckvorgesteuertes 2/2-Wege-Schaltventil (30), vorzugsweise ein Sitzventil, vorgesehen ist, und dass zwischen der Druckvorsteuerung (31) des 2/2-Wege-Schaltventils (30) und der Tankleitung (20) und/oder der Druckleitung (19) stromab des 2/2-Wege-Schaltventils (30) ein Steueröl-2/2-Wege-Magnetsitzventil (38) vorgesehen ist, das bei Bestromung seines Magneten (39) seine Sperrstellung einnimmt und das 2/2-Wege-Schaltventil (30) in die Sperrstellung schaltet oder in dieser hält, und dessen Magnet-Bestromung vor jedem Nachführschritt von der Steuervorrichtung CU abgeschaltet und nach jedem Nachführschritt wieder eingeschaltet wird, und das sich in der Notsituation automatisch unter Umschalten des 2/2-Wege-Schaltventils (30) in die Durchgangsstellung stellt.

3. Elektrohydraulische Verstellvorrichtung nach Anspruch 1, **dadurch gekennzeichnet, dass** jedes Richtungsmagnetventil (26, 27) als 2/4-Richtungsmagnetventil mit zwei gegensinnigen Magneten (SA, SB; NA, NB) und einer Schaltstellungs-Selbsthalte-Memory-Verrastung (28, 29) ausgebildet ist, und dass die Steuervorrichtung (CU) eine Programmierung (17) aufweist, die beide Schaltstellungs-Selbsthalte-Memory-Verrastungen (28, 29) nach Ausführen eines Nachführschritts über jeweils die einen Magneten vorsorglich für den Notfallschritt umstellt und bei Initiieren des nächsten Nachführschritts über jeweils die anderen Magneten wieder für den Nachführschritt rückstellt.

4. Elektrohydraulische Verstellvorrichtung nach Anspruch 3, **dadurch gekennzeichnet, dass** jedem, mehreren oder allen Magneten (SA, SB; NA, NB) wenigstens ein Notsituations-Kondensator (K) mit einer zur Magnetbetätigung trotz aufgetretener Notsituation vorbestimmten Kapazität zugeordnet ist, mit dem die Richtungsmagnetventile (26, 27) und jede Schaltstellungs-Selbsthalte-Memory-Verrastung (28, 29) bei Auftreten der Notsituation auf den Notfallschritt umstellbar sind.

5. Elektrohydraulische Verstellvorrichtung nach Anspruch 2, **dadurch gekennzeichnet, dass** zwischen dem an die Druckleitung (19) stromab des 2/2-Wege-Schaltventils (30) angeschlossenen Steueröl-2/2-Wege-Magnetsitzventil (38) und der Tankleitung (20) eine Nachsaugverbindung (53) mit einem Rückschlagventil (52) vorgesehen ist.

6. Elektrohydraulische Verstellvorrichtung nach Anspruch 1, **dadurch gekennzeichnet, dass** die Speicherladeschaltung (16) mittels zumindest eines den Druck in der Druckleitung (19) stromauf des Druckspeichers (35) abgreifenden Drucksensors (18) ausgehend von einem niedrigen Speichernachladedruck (P1) einen höheren Speicherladedruck (P2) geringfügig unterhalb eines Systemgrenzdrucks (P5) einstellt, und dass der Speichernachladedruck (P1) erheblich höher ist als ein zum Ausführen des Notfallschritts erforderlicher Mindestdruck (P3), wobei, vorzugsweise, P1 etwa 350 bar, P2 400 bar, P3 etwa 150 bar, P5 etwa 420 bar betragen.

7. Elektrohydraulische Verstellvorrichtung nach wenigstens einem der vorhergehenden Ansprüche, **dadurch gekennzeichnet, dass** jeder Hydrozylinder (Z1, Z2) in den Arbeitsleitungen (21, 22) von zwei überkreuz aufsteuerbaren Lasthalteventilen (23) abgesichert ist, und dass, vorzugsweise, die Arbeitsleitungen (21, 22) zwischen den Hydrozylindern (Z1, Z2) und den Lasthalteventilen (23) über Druckbegrenzungsventile (25) an die Tankleitung (20) angeschlossen sind, die auf einen Ansprechdruck (P4) unterhalb des Speichernachladedrucks (P1) eingestellt sind.

8. Elektrohydraulische Steuervorrichtung nach Anspruch 1, **dadurch gekennzeichnet, dass** zwischen der Pumpen/Druckspeicher/Tank-Anordnung (11) und den beiden Richtungsmagnetventilen (26, 27) ein 2/4-Wege-Umschaltventil (45) entweder mit einer Druckvorsteuerung (47) von der Pumpe (12) und/oder mit einer Magnetbetätigung (48) jeweils in Richtung zu einer Einstellung der Verstellvorrichtung auf einen Nachführschritt vorgesehen ist, dass das 2/4-Wege-Umschaltventil (45) bei Auftreten der Notsituation durch Federkraft selbsttätig in eine Schaltstellung bringbar ist, in der die Verstellvorrichtung zum Ausführen des Notfallschritts umgestellt wird, und dass in der Druckleitung (19) stromauf des 2/4-Wege-Umschaltventils (48) und stromab des Druckspeichers (35) ein Arbeitsöl-2/2-Magnetsitzventil (41), vorzugsweise mit Druckvorsteuerung (44), angeordnet ist, das bei stromlosem Magneten (42) eine Durchgangsstellung einnimmt und bei bestromtem Magneten (42) sperrt.

9. Elektrohydraulische Verstellvorrichtung nach wenigstens einem der vorhergehenden Ansprüche, **dadurch gekennzeichnet, dass** an das eine Richtungsmagnetventil (26) die Arbeitsleitungen (21, 22) zu beiden Hydrozylindern (Z1, Z2) angeschlossen sind, und dass das andere Richtungsmagnetventil (27) zwischen den Arbeitsleitungen (21, 22) zu einem Hydrozylinder (Z1) und dem anderen Hydrozylinder (Z2) angeordnet ist.

## Claims

1. Electrohydraulic adjusting device of a solar trough (E) of a solar generator (G) rotatable about an axis (2) of the solar generator (G), comprising two double actuated hydrocylinders (Z1, Z2) coupled with the axis (2) for at least stepwise tracking the solar trough (E) to follow the position of the sun while wandering from East to West and for executing an emergency step to the East in an emergency situation caused by a power breakdown or switching-off of electricity, wherein working lines (21, 22) of the hydrocylinders (Z1, Z2 selectively) can be connected with a pressure line (19) connected to a pump (12) driven by an electric motor and a tank line (20) respectively via a directional solenoid valve (26, 27), and an electronic programmable control device (CU) connected at least with the directional solenoid valve (26, 27) and the pump (12), wherein a pressure accumulator (35) are connected with the pressure line and an accumulator loading circuitry (16) for the pump (12) are provided, and wherein the solar trough (E) while pointing to the sun automatically can be adjusted by means of the pressure accumulator (35) in at least one emergency case step,
**characterized in that**
after each executed tracking step to the West the adjusting device is adjusted by the control device (DU) preliminarily and precautionarily for the execution of an emergency case step to the East and first is readjusted for executing the next tracking step prior to the respective next tracking step.

2. Electrohydraulic adjusting device according to claim 1,
**characterized in that**
a pilot pressure-controlled 2/2-multiway-switching valve (30) is provided in the pressure line (19) downstream of the pressure accumulator (35), preferably a seat valve, and that between the pilot pressure control (31) of the 2/2-multiway-switching valve (30) and the tank line (20) and/or the pressure line (19) downstream the 2/2-multiway switching valve (30), a control oil 2/2-multiway-solenoid seat valve (38) is provided which control oil-2/2-multiway-solenoid seat valve (30a) establishes a blocking position when its solenoid (39) is supplied with electric current and switches the 2/2-multiway-switching valve (30) into the blocking position or holds it in the blocking position, that the electric current for the solenoid is switched off prior to each tracking step and is switched on after each tracking step by the control device (CU), and that in the emergency situation the control oil 2/2-multiway-solenoid seat valve (38) while switching the 2/2-multiway-switching valve (30) automatically switches into its through flow position.

3. Electrohydraulic adjusting device according to claim 1,
**characterized in that**
each directional solenoid valve (26, 27) is a 2/4-directional-solenoid valve having two counteracting solenoids (SA, SB; NA, NB) and a memory ratching device (28, 29) for holding a respective valve switching position, and that the control device (CU) comprises a programming (17) for adjusting after the execution of a tracking step both memory ratching devices (28, 29) precautionarily for an emergency case step by respective ones solenoids and for readjusting the memory ratching devices (28, 29) again for the next tracking step when initiating the next tracking step by means of the respective other solenoids.

4. Electrohydraulic adjusting device according to claim 3,
**characterized in that**
at least one emergency situation capacitor (K) having a predetermined capacity sufficient to actuate the solenoids despite an acute emergency situation is associated to each, to several or to all solenoids (SA, SB; NA, NB), by which capacitor the directional solenoid valves (26, 27) and each memory ratching device (28, 29) are adjusted automatically upon occurrence of an emergency situation an emergency case step.

5. Electrohydraulic adjusting device according to claim 2,
**characterized in that**
a suction connection (53) containing a check valve (52) is provided between the tank line (20) and the control oil-2/2-multiway-solenoid seat valve (38) connected to the pressure line (19) downstream of the 2/2-multiway-switching valve (30).

6. Electrohydraulic adjusting device according to claim 1,
**characterized in that**
the accumulator loading circuitry (16), starting from a low accumulator loading pressure (P1), produces a higher accumulator loading pressure (P2) slightly below a system limit pressure (P5) by means of a pressure sensor (18) at least detecting the pressure in the pressure line (19) upstream of the pressure accumulator (35), and that the accumulator loading pressure (P1) is significantly higher than a minimum pressure (P3) required for executing an emergency case step, wherein, preferably, the pressures amount in case of P2 to about 350 bar, in case of Ps to about 400 bar, in case of P3 to about 150 bar, and in case of P5 to about 420 bar.

7. Electrohydraulic adjusting device according to at least one of the preceding claims,
**characterized in that**
each hydrocylinder (Z1, Z2) in the working lines (21, 22) is safeguarded by two load holding valves (23) controlled to open crosswise from the working lines (21, 22), and that, preferably, the working lines (21, 22) are connected via pressure-limiting valves (25) to the tank line (20) between the hydrocylinders (Z1, Z2) and the load holding valves (23), the load holding valves (23) being set to an opening response pressure (P4) lower than the accumulator loading pressure (P1).

8. Electrohydraulic adjusting device according to claim 1,
**characterized in that**
a 2/4-multiway-switching valve (45) either having a pilot pressure control (47) from the side of the pump (12) and/or a solenoid actuation (48) respectively in a direction to an adjustment of the adjusting device for executing a tracking step is provided between the arrangement (11) of the pump/pressure accumulator/tank and both directional solenoid valves (26, 27), that in case of the occurrence of an emergency situation the 2/4-multiway-switching valve (45) is brought by spring force automatically into a switching position, in which the adjusting device is adjusted for the execution of an emergency case step, and that a working oil-2/2-solenoid seat valve (41), preferably having a pilot pressure control (44), is arranged in the pressure line (19) upstream of the 2/4-multiway-switching valve (48) and downstream of the pressure accumulator (35), the working oil-2/2-solenoid seat valve (41) holding a through flow position as long as the solenoid (42) is not supplied with current and switching into a blocking position when the solenoid (42) is supplied with current.

9. Electrohydraulic adjusting device according to at least one of the preceding claims,
**characterized in that**
the working lines (21, 22) extending to both hydrocylinders (Z1, Z2) are connected with the one directional solenoid valve (26), and that the other directional solenoid valve (27) is arranged between the working lines (21, 22) to one hydrocylinder (Z1) and the other hydrocylinder (Z2).

## Revendications

1. Dispositif de réglage électrohydraulique d'un concentrateur solaire en auge (E) (également appelé capteur cylindro-parabolique) rotatif autour d'un axe (2) et faisant partie d'un générateur solaire (G), comprenant deux vérins hydrauliques (Z1, Z2) à double effet et couplés à l'axe (2), qui sont destinés à assurer, pour le concentrateur solaire en auge (E), au moins un suivi pas à pas de la position du soleil se déplaçant d'est en ouest, et l'exécution d'un pas d'urgence vers l'est dans une situation d'urgence occasionnée par une coupure de courant ou un arrêt de l'alimentation en courant,
dispositif dans lequel des conduites de travail (21, 22) des vérins hydrauliques (Z1, Z2) peuvent être reliées chacune sélectivement, par l'intermédiaire d'une électrovanne de direction (26, 27), à une conduite de pression (19) raccordée à une pompe (12) pouvant être entraînée par moteur électrique, et à une conduite de réservoir (20), le dispositif comprenant également une unité de commande (CU) électronique et programmable, qui est reliée au moins aux électrovannes de direction (26, 27) et à la pompe (12),
et dans lequel il est également prévu un accumulateur de pression (35) raccordé à la conduite de pression (19) et un circuit de charge d'accumulateur (16) pour la pompe (2), et le concentrateur solaire en auge (E) orienté en direction du soleil peut être déplacé automatiquement par l'intermédiaire d'un pas d'urgence en provenance de l'accumulateur de pression (35),
**caractérisé en ce qu'**à l'aide de l'unité de commande (CU), le dispositif de réglage peut, après chaque pas de suivi vers l'ouest ayant été exécuté, être commuté de manière temporaire et préventive pour l'exécution d'un pas d'urgence vers l'est, et est seulement à nouveau commuté en retour avant le pas de suivi respectivement suivant, pour exécuter ce pas de suivi suivant.

2. Dispositif de réglage électrohydraulique selon la revendication 1, **caractérisé en ce que** dans la conduite de pression (19), en aval de l'accumulateur de pression (35), est prévue une vanne de commutation 2/2 voies (30) à commande par pression pilote, de préférence une vanne à siège, et **en ce qu'**entre la commande de pression pilote (31) de la vanne de commutation 2/2 voies (30) et la conduite de réservoir (20) et/ou la conduite de pression (19), en aval de la vanne de commutation 2/2 voies (30), est prévue une électrovanne à siège 2/2 voies d'huile de commande (38), qui en cas d'alimentation en courant de son aimant (39) prend sa position de blocage et commute la vanne de commutation 2/2 voies (30) dans la position de blocage ou la maintient dans celle-ci, et dont l'alimentation en courant de l'aimant est arrêtée par l'unité de commande (CU) avant chaque pas de suivi et est à nouveau mise en marche après chaque pas de suivi, et qui, dans la situation d'urgence, se met automatiquement dans la position passante par commutation de la vanne de commutation 2/2 voies (30).

3. Dispositif de réglage électrohydraulique selon la revendication 1, **caractérisé en ce que** chaque électrovanne de direction (26, 27) est réalisée en tant qu'électrovanne de direction 2/4 avec deux aimants 35 opposés (SA, SB; NA, NB) et un enclenchement mémorisé d'auto-maintien de la position de commutation (28, 29),
et **en ce que** l'unité de commande (CU) présente une programmation (17) qui, après exécution d'un pas de suivi, par l'intermédiaire respectivement des uns desdits aimants, commute les deux enclenchements mémorisés d'auto-maintien de la position de commutation (28, 29) de manière préventive pour le pas d'urgence, et, après initiation du pas de suivi suivant, les ramène à nouveau dans la position pour le pas de suivi, par l'intermédiaire des autres aimants respectifs.

4. Dispositif de réglage électrohydraulique selon la revendication 3, **caractérisé en ce qu'**à chaque, à plusieurs ou à tous les aimants (SA, SB; NA, NB), est associé au moins un condensateur de situation d'urgence (K) avec une capacité prédestinée à un actionnement de l'aimant malgré la situation d'urgence apparue, et à l'aide duquel les électrovannes de direction (26, 27) et chaque enclenchement mémorisé d'auto-maintien de la position de commutation (28, 29) peuvent être commutés sur le pas d'urgence lors de l'apparition de la situation d'urgence.

5. Dispositif de réglage électrohydraulique selon la revendication 2, **caractérisé en ce qu'**entre l'électrovanne à siège 2/2 voies d'huile de commande (38) raccordée à la conduite de pression (19) en aval de la vanne de commutation 2/2 voies (30), et la conduite de réservoir (20), il est prévu une liaison de ré-aspiration (53) avec une vanne antiretour (52).

6. Dispositif de réglage électrohydraulique selon la revendication 1, **caractérisé en ce que** le circuit de charge d'accumulateur (16), au moyen d'au moins un capteur de pression (18) prélevant la pression dans la conduite de pression (19) en amont de l'accumulateur de pression (35), règle, à partir d'une pression de recharge d'accumulateur (P1) basse, une pression de charge d'accumulateur (P2) plus élevée légèrement en-dessous d'une pression limite de système (P5), et **en ce que** la pression de recharge d'accumulateur (P1) est nettement plus élevée qu'une pression minimale (P3) nécessaire pour exécuter le pas d'urgence, la pression P1 valant environ 350 bar, P2 400 bar, P3 environ 150 bar et P5 environ 420 bar.

7. Dispositif de réglage électrohydraulique selon l'une au moins des revendications précédentes, **caractérisé en ce que** chaque vérin hydraulique (Z1, Z2) est sécurisé dans les conduites de travail (21, 22) par deux vannes de maintien de charge (23) pouvant être commandées en ouverture de manière croisée, et **en ce que**, de préférence, les conduites de travail (21, 22) sont raccordées, entre les vérins hydrauliques (Z1, Z2) et les vannes de maintien de charge (23), à la conduite de réservoir (20) par l'intermédiaire de vannes de limitation de pression (25), qui sont réglées sur une pression de déclenchement (P4) sous la pression de recharge d'accumulateur (P1).

8. Dispositif de réglage électrohydraulique selon la revendication 1, **caractérisé en ce qu'**entre l'agencement pompe/accumulateur de pression/réservoir (1) et les deux électrovannes de direction (26, 27), est prévue une vanne d'inversion 2/4 voies (45) avec une commande à pression pilote (47) par la pompe (2) et/ou avec un actionnement d'aimant (48) respectivement dans le sens d'un réglage du dispositif de réglage sur un pas de suivi, **en ce que** la vanne d'inversion 2/4 voies (45), lors de l'apparition de la situation d'urgence, peut être amenée automatiquement par une force de ressort, dans une position de commutation dans laquelle le dispositif de réglage est commuté pour exécuter le pas d'urgence, et **en ce que** dans la conduite de pression (19), en amont de la vanne d'inversion 2/4 voies (45) et en aval de l'accumulateur de pression (35), est agencée une électrovanne à siège 2/2 d'huile de travail (41), de préférence avec une commande à pression pilote (44), qui pour un aimant (42) non alimenté en courant, prend une position passante, et bloque pour un aimant (42) alimenté en courant.

9. Dispositif de réglage électrohydraulique selon
l'une au moins des revendications précédentes, **caractérisé en ce qu'**à l'électrovanne de direction (26) sont raccordées les conduites de travail (21, 22) vers les deux vérins hydrauliques (Z1, Z2), et **en ce que** l'autre électrovanne de direction (27) est agencée entre les conduites de travail (21, 22) vers un vérin hydraulique (Z1) et l'autre vérin hydraulique (Z2).
